# EUROPÄISCHE PATENTANMELDUNG

(11) **EP 4 177 588 A1**
(43) Veröffentlichungstag der Anmeldung: **10.05.2023**
(21) Anmeldenummer: 22204186.5
(22) Anmeldetag: 27.10.2022
(51) Int. Cl.: G01M 17/02, B60C 11/24

(54) **VERFAHREN ZUR ERMITTLUNG EINER PROFILTIEFE EINES FAHRZEUGREIFENS**

(30) Priorität: 08.11.2021 DE 102021212539
(71) Anmelder: Continental Reifen Deutschland GmbH, 30165 Hannover (DE)
(72) Erfinder: Dr. Großkreutz, Holger, 30165 Hannover (DE); Voelker, Bert, 30165 Hannover (DE); Fricke, Lukas, 30165 Hannover (DE); Strzelczyk, Matthias, 30165 Hannover (DE); Pietsch, Holger, 30165 Hannover (DE)
(74) Vertreter: Continental Corporation

(57) **Zusammenfassung**

Es wird ein Verfahren mit den folgenden Schritten vorgeschlagen:
a) Bereitstellen eines Fahrzeugreifens mit einer Profiltiefe,
b) Aufnahme von zu mindestens einem Teilbereich vom Reifenprofil des Fahrzeugreifens mit einer Kamera (6),
c) Automatisierte Ermittlung von Tiefeninformationen von dem aufgenommenen Bild des Teilbereiches der Oberseite des Laufstreifens,
wobei die geometrischen Tiefeninformationen mit der Kamerasoftware analysiert und ausgewertet werden,
d) Abspeichern der Bildinformationen und der Tiefeninformationen auf einem Speichermedium,
e) Erstellen eines dreidimensionalen Modells (1) von dem aufgenommenen Reifenprofil mit den ermittelten Tiefeninformationen,
f) Ermitteln einer Profiltiefe (4) des Fahrzeugreifens in einem vorgegebenen Bereich des Reifenprofiles,
g) Weitergabe der Information der ermittelten Profiltiefe (4) an einen Endkunden.

## Beschreibung

Die Erfindung betrifft ein Verfahren zur Ermittlung einer Profiltiefe eines Fahrzeugreifens.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen.

Der Erfindung lag die Aufgabe zugrunde, ein Verfahren bereitzustellen, mit dem die Bestimmung einer Profiltiefe einfach und mit einer hohen Genauigkeit erfolgen kann.

Gelöst wird die Aufgabe durch ein Verfahren mit den folgenden Schritten:
a) Bereitstellen eines Fahrzeugreifens mit einer Profiltiefe,
b) Aufnahme von zu mindestens einem Teilbereich vom Reifenprofil des Fahrzeugreifens mit einer Kamera,
c) Automatisierte Ermittlung von Tiefeninformationen von dem aufgenommenen Bild des Teilbereiches der Oberseite des Laufstreifens,
   wobei die geometrischen Tiefeninformationen mit der Kamerasoftware analysiert und ausgewertet werden,
d) Abspeichern der Bildinformationen und der Tiefeninformationen auf einem Speichermedium,
e) Erstellen eines dreidimensionalen Modells von dem aufgenommenen Reifenprofil mit den ermittelten Tiefeninformationen,
f) Ermitteln einer Profiltiefe des Fahrzeugreifens in einem vorgegebenen Bereich des Reifenprofiles,
g) Weitergabe der Profiltiefen-Information an einen Endkunden.

Ein Vorteil der Erfindung ist insbesondere darin zu sehen, dass mit dem neuen Verfahren die Profiltiefe am Fahrzeugreifen auf einfache Weise und mit einer hohen Genauigkeit ermittelt werden kann.

Das Reifenprofil eines Fahrzeugreifens wird mit einer Kamera aufgenommen. Mit der angebundenen Kamerasoftware wird ein dreidimensionales Modell mit Tiefeninformationen des aufgenommenen Reifenprofils erstellt und anschließend automatisiert die Profiltiefe in einem bestimmten Bereich des Fahrzeugreifens ermittelt. Der Halter des Fahrzeuges muss nicht mehr manuell mit einem Profiltiefenmesser die Profiltiefe am Fahrzeug messen. Bei der Kamera kann es sich beispielsweise um eine Kamera von einem Smartphones handeln, mit der ein Teilbereich des Reifenprofils aufgenommen wird. Die Profiltiefe wird ebenfalls automatisiert auf dem Smartphone angezeigt.

In einer vorteilhaften Weiterbildung der Erfindung ist vorgesehen, dass das dreidimensionale Modell mit Hilfslinien ergänzt wird, um die Profiltiefe an vorgegebenen Positionen am Reifenprofil zu ermitteln.

Dadurch kann die Profiltiefe in einem Teilbereich des Laufstreifens mit einer hohen Genauigkeit ermittelt werden. Außerdem wird dem Endkunden damit angezeigt, an welcher Position im Reifenprofil die Profiltiefe ermittelt wurde.

In einer weiteren vorteilhaften Weiterbildung der Erfindung ist vorgesehen, dass die Kamera eine Kamera von einem Smartphone ist und die Kamerasoftware zur Ermittlung der Tiefeninformationen auf dem Smartphone installiert ist, wobei die ermittelte Profiltiefe auf dem Smartphone angezeigt wird. Dadurch kann der Halter des Fahrzeuges auf einfache Weise jederzeit die Profiltiefe an einem Fahrzeugreifen ermitteln.

In einer weiteren vorteilhaften Weiterbildung der Erfindung ist vorgesehen, dass die Kamera an einer Halterung angeordnet ist, wobei die Halterung eine automatisierte Führung der Kamera unterstützt, um unterschiedliche Teilbereiche des Reifenprofils aufzunehmen und zu untersuchen.

Eine entsprechende Halterung könnte beispielsweise beim Ermitteln der Profiltiefe in einer Autowerkstatt nützlich sein. Die Halterung könnte an der Felge oder am Radkasten montiert werden, um anschließend den Fahrzeugreifen mit der Kamera automatisiert zu untersuchen.

In einer weiteren vorteilhaften Weiterbildung der Erfindung ist vorgesehen, dass bei der Auswertung der Kamerabilder geometrische Reifenanomalien ermittelt und analysiert werden.

Dadurch können mit der Kamera zusätzlich Reifenschäden automatisiert erkannt werden.

In einer weiteren vorteilhaften Weiterbildung der Erfindung ist vorgesehen, dass die Reifenanomalien ein ungleichmäßiger Abrieb des Reifenprofiles, Risse im Laufstreifen, Profilklotzausbrüche, Beulen und Einschnürungen in der Seitenwand umfassen.

Diese Art von Reifenanomalien lassen sich mit der Kamera besonders gut detektieren.

In einer weiteren vorteilhaften Weiterbildung der Erfindung ist vorgesehen, dass die Kamerasoftware zur Bestimmung der Profiltiefe mit einer Vielzahl von Reifeninformationen unterstützt wird.

Die Reifeninformationen können beispielsweise Informationen enthalten, an welchen Positionen im Reifenprofil im Normalfall die Profiltiefenmessung zu erfolgen hat.

In einer weiteren vorteilhaften Weiterbildung der Erfindung ist vorgesehen, dass die Kamerasoftware bei der Bestimmung der Profiltiefe auf einzelne manuelle Profiltiefenmessungen zurückgreifen kann, die am Reifenprofil erfolgt sind. Dadurch kann die Genauigkeit bei der Ermittlung der Profiltiefe wesentlich erhöht werden.

In einer weiteren vorteilhaften Weiterbildung der Erfindung ist vorgesehen, dass die ermittelten dreidimensionalen Modelle und die ermittelten Tiefeninformationen des Reifenprofils an eine cloud-basierte Datenbank übermittelt werden, um Flottenbetreibern von Fahrzeugen einen Zugang zu den ermittelten Daten zu ermöglichen.

Der Flottenbetreiber oder Endkunde kann dadurch beispielsweise auch den Verlauf der Profiltiefe über einen bestimmten Zeitbereich verfolgen.

In einer weiteren vorteilhaften Weiterbildung der Erfindung ist vorgesehen, dass die ermittelten dreidimensionalen Modelle und die ermittelten Tiefeninformationen des Reifenprofils an eine Software-Applikation übermittelt werden, über die der Endkunde profilbasierte Serviceangebote zur Verfügung gestellt bekommt.

Dem Endkunden kann beispielsweise angezeigt werden, wann voraussichtlich der nächste Reifenwechsel erforderlich ist. Außerdem kann beispielsweise eine Empfehlung mitgegeben werden, ob er in Zukunft mit Winterreifen oder Sommerreifen fahren sollte.

Anhand eines Ausführungsbeispiels wird die Erfindung im Folgenden näher beschrieben.

Es zeigt:

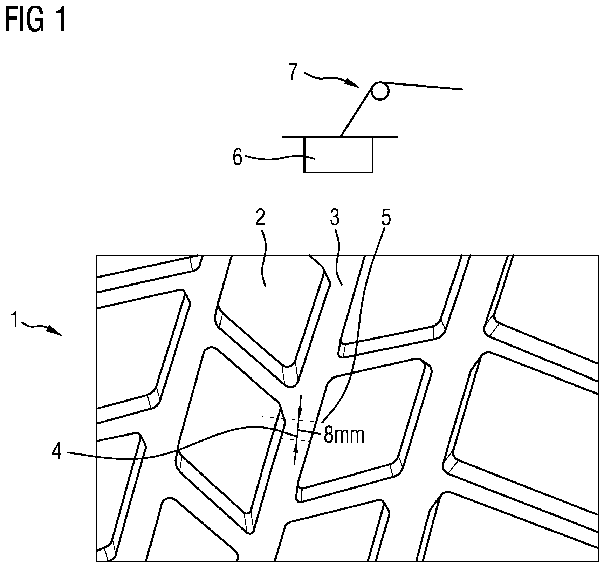

Fig. 1: Ein dreidimensionales Modell von einem Teilbereich eines Reifenprofils.

Die Figur 1 zeigt ein Ausführungsbeispiel.

Das optische dreidimensionale Modell zeigt einen Teilbereich von einem Reifenprofil. Das Reifenprofil umfasst eine Vielzahl von einzelnen Profilklötzen 2 und Umfangsrillen 3. Dieses dreidimensionale Modell wird mit der Kamerasoftware der Kamera erstellt, die eine Aufnahme des Reifenprofils gemacht hat. Die Kamera kann mit der integrierten Software aus den aufgenommenen Bildern Tiefeninformationen ermitteln. Beispielsweise wird das Reifenprofil mit Infrarotsensoren abgetastet, die in der Kamera integriert sind. Die Tiefeninformationen werden mit den Bildinformationen gekoppelt, so dass aus diesen Informationen auch die Profiltiefe in der Umfangsrille 3 zwischen den Profilklötzen 2 ermittelt werden kann. Auf der Oberseite zwischen den beiden benachbarten Profilklötzen ist eine Hilfslinie 5 angeordnet. Diese Hilfslinie dient dazu, die Profiltiefe 4 in der Umfangsrille 3 mit einer hohen Genauigkeit zu bestimmen.

Das dreidimensionale Modell mit den Tiefeninformationen wird beispielsweise in einer Cloud-basierten Datenbank abgespeichert. Dadurch können beispielsweise Flottenbetreiber von Fahrzeugen jederzeit auf die Daten zugreifen. Die Flottenbetreiber haben dadurch beispielsweise die Möglichkeit, vorher zu sagen, wann wieder ein Reifenwechsel in der Zukunft erforderlich sein wird.

Über dem dreidimensionalen Modell 1 des Reifenprofils ist schematisch eine Kamera 6 dargestellt, die an einer automatisierten Halterung 7 angeordnet sein kann. Diese Halterung kann beispielsweise an der Fahrzeugfelge oder am Radkasten angeordnet werden, um automatisiert das Reifenprofil oder die Seitenwände des Fahrzeugreifens zu untersuchen. Die Profiltiefe und mögliche Reifenschäden können automatisiert mit einer Applikationssoftware von einem Smartphone angezeigt werden.

### Bezugszeichenliste

- 1: Dreidimensionales Modell eines Teilbereiches des Reifenprofils
- 2: Profilklotz
- 3: Umfangsrille
- 4: Ermittelte Profiltiefe
- 5: Hilfslinie zwischen der Oberseite von zwei Profilklötzen
- 6: Kamera
- 7: Halterung für Kamera

## Patentansprüche

1. Verfahren zur Ermittlung einer Profiltiefe eines Fahrzeugreifens mit den folgenden Schritten:
a) Bereitstellen eines Fahrzeugreifens mit einer Profiltiefe,
b) Aufnahme von zu mindestens einem Teilbereich vom Reifenprofil des Fahrzeugreifens mit einer Kamera (6),
c) Automatisierte Ermittlung von Tiefeninformationen von dem aufgenommenen Bild des Teilbereiches der Oberseite des Laufstreifens, wobei die geometrischen Tiefeninformationen mit der Kamerasoftware analysiert und ausgewertet werden,
d) Abspeichern der Bildinformationen und der Tiefeninformationen auf einem Speichermedium,
e) Erstellen eines dreidimensionalen Modells (1) von dem aufgenommenen Reifenprofil mit den ermittelten Tiefeninformationen,
f) Ermitteln einer Profiltiefe (4) des Fahrzeugreifens in einem vorgegebenen Bereich des Reifenprofiles,
g) Weitergabe der Information der ermittelten Profiltiefe (4) an einen Endkunden.

2. Verfahren nach Anspruch 1,
**dadurch gekennzeichnet, dass**
das dreidimensionale Modell (1) mit Hilfslinien (5) ergänzt wird, um die Profiltiefe (4) an vorgegebenen Positionen am Reifenprofil zu ermitteln.

3. Verfahren nach einem der vorhergehenden Ansprüche,
**dadurch gekennzeichnet, dass**
die Kamera (6) eine Kamera von einem Smartphone ist und die Kamerasoftware zur Ermittlung der Tiefeninformationen auf dem Smartphone installiert ist,
wobei die ermittelte Profiltiefe (4) auf dem Smartphone angezeigt wird.

4. Verfahren nach einem der vorhergehenden Ansprüche,
**dadurch gekennzeichnet, dass**
die Kamera (6) an einer Halterung (7) angeordnet ist, wobei die Halterung (7) eine automatisierte Führung der Kamera unterstützt, um unterschiedliche Teilbereiche des Reifenprofils aufzunehmen und zu untersuchen.

5. Verfahren nach einem der vorhergehenden Ansprüche,
**dadurch gekennzeichnet, dass**
bei der Auswertung der Kamerabilder geometrische Reifenanomalien ermittelt und analysiert werden.

6. Verfahren nach einem der vorhergehenden Ansprüche,
**dadurch gekennzeichnet, dass**
die Reifenanomalien ein ungleichmäßiger Abrieb des Reifenprofiles, Risse im Laufstreifen, Profilklotzausbrüche, Beulen und Einschnürungen in der Seitenwand umfassen.

7. Verfahren nach einem der vorhergehenden Ansprüche,
**dadurch gekennzeichnet, dass**
die Kamerasoftware zur Bestimmung der Profiltiefe mit einer Vielzahl von Reifeninformationen unterstützt wird.

8. Verfahren nach einem der vorhergehenden Ansprüche,
**dadurch gekennzeichnet, dass**
die Kamerasoftware bei der Bestimmung der Profiltiefe auf einzelne manuelle Profiltiefenmessungen zurückgreifen kann, die im Vorfeld am Reifenprofil erfolgt sind.

9. Verfahren nach einem der vorhergehenden Ansprüche,
**dadurch gekennzeichnet, dass**
die ermittelten dreidimensionalen Modelle (1) und die ermittelten Tiefeninformationen des Reifenprofils an eine cloud-basierte Datenbank übermittelt werden, um Flottenbetreibern von Fahrzeugen einen Zugang zu den ermittelten Daten zu ermöglichen.

10. Verfahren nach einem der vorhergehenden Ansprüche,
**dadurch gekennzeichnet, dass**
die ermittelten dreidimensionalen Modelle (1) und die ermittelten Tiefeninformationen des Reifenprofils an eine Software-Applikation übermittelt werden, über die der Endkunde profilbasierte Serviceangebote zur Verfügung gestellt bekommt.
